# FASCICULE DE BREVET EUROPEEN

(11) **EP 0 424 420 B1**
(45) Date de publication et mention de la délivrance du brevet: **10.05.1995**
(21) Numéro de dépôt: 89907645.9
(22) Date de dépôt: 09.06.1989
(51) Int. Cl.: C08L 95/00, C08K 5/39

(54) **PROCEDE DE PREPARATION DE COMPOSITIONS DE BITUME-CAOUTCHOUC**
VERFAHREN ZUR HERSTELLUNG VON BITUMEN-KAUTSCHUK-ZUSAMMENSETZUNGEN
PROCESS FOR PREPARING BITUMEN-RUBBER COMPOSITIONS

(30) Priorité: 10.06.1988 BE 8800660
(43) Date de publication de la demande: 02.05.1991
(73) Titulaire: FINA RESEARCH S.A., B-7181 Seneffe (Feluy) (BE)
(72) Inventeur: DEFOOR, Frans, Maurice, Joseph, B-1820 Strombeek-Bever (BE); HALLET, Jean-Philippe, B-1030 Bruxelles (BE); COUPIN, Thierry, Christian, B-6508 Carnières (BE)
(86) Numéro de dépôt international: BE8900026
(87) Numéro de publication internationale: WO8912079

(56) Documents cités:
- EP-A- 0 174 795
- FR-A- 2 078 893
- US-A- 2 684 391
- US-A- 3 751 389

## Description

La présente invention a trait au domaine de la modification de liants hydrocarbonés tels que bitumes, asphaltes, goudrons, par des élastomères, avec une étape de vulcanisation pour l'obtention d'enduits industriels et de bitumes routiers ou analogues. Elle concerne plus particulièrement un procédé d'obtention de compositions vulcanisées, à base de bitume et de copolymères styrène-butadiène.

Il est connu depuis longtemps d'incorporer aux bitumes, afin d'améliorer leurs propriétés mécaniques et de satisfaire aux normes requises pour l'emploi comme liants, divers élastomères comme par exemple des copolymères blocs, séquencés ou non, de type diène conjugué-vinyl aromatique, le plus souvent des copolymères blocs comme les di-blocs styrène-butadiène-styrène. Après vulcanisation, on obtient des produits conservant leurs caractéristiques élastiques à basse température.

La réalisation de tels mélanges bitumes-polymères pose cependant des problèmes relatifs notamment à leur homogénéité et au temps très long de malaxage nécessaire pour obtenir l'homogénéité adéquate. Par exemple, même dans les conditions les plus favorables connues à ce jour, il faut maintenir les mélanges sous agitation pendant au moins deux heures, et le plus souvent trois à quatre heures, à une température de l'ordre de 150-190°C, pour parvenir à une homogénéité correcte du mélange bitume-polymère avant l'addition de l'agent vulcanisant (brevet belge n° 865361 au nom de Elf Union).

On a constaté que les compositions bitume-caoutchouc de l'art antérieur étaient difficilement mises en oeuvre et avaient de faibles propriétés de cohésion et avaient une résistance très pauvre à la fissuration.

De plus, dans les procédés antérieurs, on utilise le soufre élémentaire comme agent de vulcanisation. Or, on a constaté qu'avec le soufre élémentaire, la réaction de vulcanisation est très rapide et non contrôlable, et l'on produit, la plupart du temps, une matière gélifiée non utilisable.

Afin de remédier à certains inconvénients, on a déjà proposé de mélanger le caoutchouc à une coupe pétrolière pour l'incorporer plus rapidement dans le bitume; cependant, on a constaté que lors de l'évaporation de cette coupe pétrolière, le produit final avait une faible résistance à la fissuration, par manque d'élasticité.

Le brevet français FR-A-2078893 décrit un procédé de préparation d'un bitume modifié par du caoutchouc dans lequel on ajoute une "quantité catalytique" d'un accélérateur de vulcanisation par radicaux libres après incorporation d'une quantité de soufre élémentaire de minimum 30% en poids par rapport au caoutchouc.

Le brevet américain US-A-3,751,383 décrit une composition thermodurcissable bitume-caoutchouc dans laquelle on ajoute un minimum de 5% en poids de soufre élémentaire par rapport au mélange ainsi qu'un accélérateur de vulcanisation.

La présente invention se rapporte à un procédé pour préparer des compositions bitumes-polymères ayant des propriétés améliorées.

La présente invention a pour objet un procédé de préparation de compositions bitumes-polymères en présence de nouveaux agents de vulcanisation, de manière à pouvoir mieux contrôler la réaction de vulcanisation.

Un autre objet de l'invention réside en un procédé de préparation de composition bitume-polymère qui ne nécessite pas l'incorporation d'une coupe pétrolière.

Le procédé de l'invention pour la préparation de compositions de bitume-polymère ayant des propriétés améliorées est caractérisé par le fait qu'il comprend les étapes qui consistent à :
(i) mettre en contact à une température comprise entre 140 et 200°C un bitume de pénétration comprise entre 20 et 320 et un polymère caoutchouteux
(ii) introduire dès que le polymère caoutchouteux est incorporé dans le bitume, de 0,01 à 0,1 % en poids, basé sur le poids du mélange bitume-polymère caoutchouteux, d'un mélange comprenant (a) un dérivé sulfuré choisi dans le groupe comprenant les dérivés des formules I et II 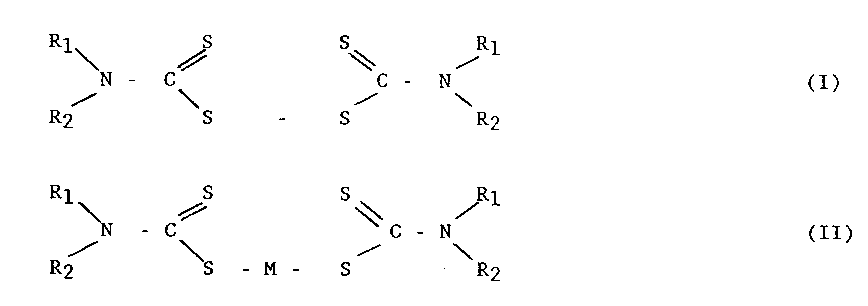 dans lesquelles R₁, R₂ sont des radicaux alkyles égaux ou différents ayant de 1 à 4 atomes de carbone, ou représentant ensemble le radical 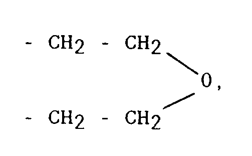 et où
   M est un métal choisi parmi le zinc, le barium et le cuivre,
   et (b) du soufre élémentaire, pris dans un rapport pondéral dérivé sulfuré/soufre élémentaire compris entre 40/60 et 80/20.

La présente demande a aussi pour objets les procédés de préparation de compositions bitume/polymère caoutchouteux tels que décrits dans les exemples 2 et 5 ci-après.

La Demanderesse a trouvé d'une manière inattendue qu'en utilisant le système d'agent de vulcanisation de l'invention, on pouvait contrôler beaucoup mieux la réaction. De plus, l'utilisation conjointe de ce système de vulcanisation et du composé alcalin a permis de préparer des liants bitumineux ayant des propriétés de résistance à la fissuration nettement améliorées.

Pour préparer le liant modifié selon l'invention, on peut utiliser tous les bitumes usuels dont la pénétration est comprise entre 20 et 320.

Selon le procédé de l'invention, on incorpore dans le bitume un caoutchouc choisi parmi les homopolymères de diène conjugué, les copolymères statistiques styrène-diène conjugué et de préférence les copolymères blocs styrène-diène conjugué.

Comme copolymères blocs caoutchouteux, on peut utiliser les copolymères blocs linéaires ou branchés du type styrène-butadiène ou styrène-isoprène dont le poids moléculaire est compris entre 30.000 et 300.000. On peut également utiliser des caoutchoucs polybutadiène ou encore des caoutchoucs styrène-butadiène (SBR) ou du polyisoprène (caoutchouc naturel) ou encore des copolymères blocs styrène-isoprène-styrène. Les copolymères blocs séquencés peuvent être linéaires, ou radiaux, ou multibranchés selon que l'on utilise ou non un agent de couplage di- ou plurifonctionnel; il est évident que l'on peut également utiliser dans le procédé de l'invention des copolymères blocs linéaires préparés sans agent de couplage. Selon un mode d'exécution préféré de l'invention, on utilise un copolymère bloc linéaire ou branché de type styrène-butadiène.

On réalise l'incorporation du copolymère bloc caoutchouteux dans le bitume pendant une durée de 1 à 4 heures, qui dépend du type d'agitateur utilisé, du poids moléculaire du polymère, ainsi que de l'indice de pénétration du bitume et de la température à laquelle on pratique l'incorporation.

La quantité de copolymère bloc caoutchouteux que l'on introduit dans le bitume dépend également de l'application qui est visée. On introduit de 1 à 20% en poids de copolymère, mais le plus souvent on en introduit de 4 à 10% en poids; basé sur le poids du liant constitué par le bitume et le copolymère caoutchouteux.

La Demanderesse a également trouvé que le système d'agent de vulcanisation était très important. De fait, on a trouvé d'une manière inattendue que l'on pouvait éliminer les nombreux inconvénients mentionnés ci-avant en combinant du soufre élémentaire et un dérivé sulfuré choisi parmi les dérivés suivants : 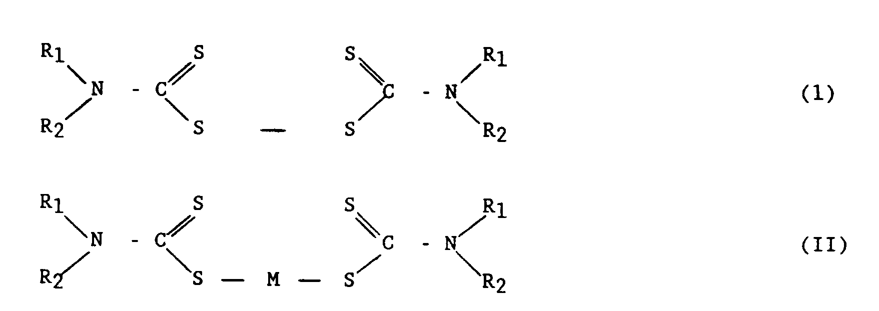
dans lesquels R₁ et R₂ sont des radicaux alkyles égaux ou différents ayant de 1 à 4 atomes de carbone, ou représentant ensemble le radical 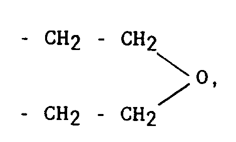
et où
M est un métal choisi parmi le zinc, le baryum et le cuivre.

Le dérivé sulfuré peut encore être choisi parmi les composés suivants représentés par les formules générales indiquées ci-après : 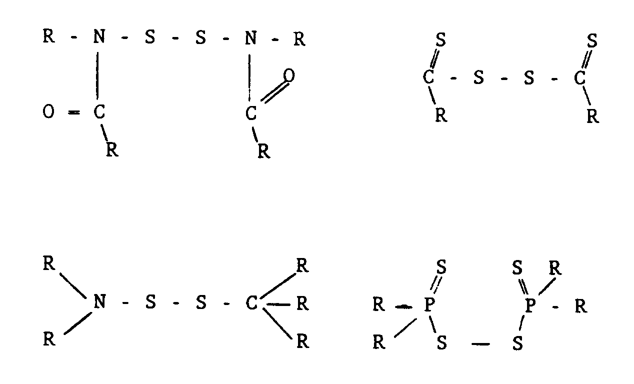 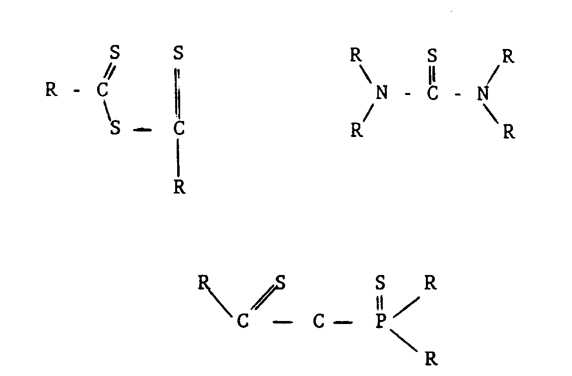
dans lesquels R représente un radical alkyle ayant de 2 à 4 atomes de carbone, ou un radical cyclohexyle.

La plupart de ces composés peuvent être représentés par les formules générales suivantes : 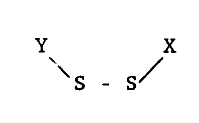
ou 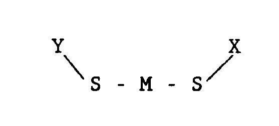
dans laquelle M est un métal choisi parmi le zinc, le ba ryum et le cuivre et dans laquelle X et Y représentent chacun les radicaux suivants :
(i) 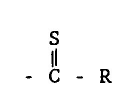 avec R étant un radical alkyle ayant de 1 à 4 atomes de carbone ou le radical 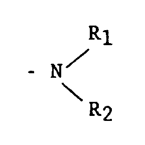 avec R₁ et R₂ étant des radicaux alkyles égaux ou différents et ayant de 1 à 4 atomes de carbone ou représentant ensemble le radical 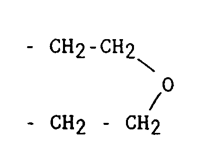
(ii) 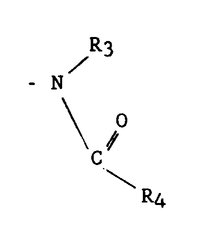 R₃ et R₄ représentant des radicaux alkyles ayant de 2 à 4 atomes de carbone ou un radical cyclohexyle ou 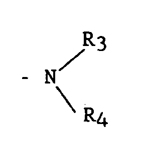
(iii) 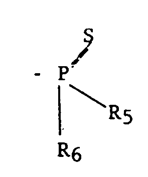 avec R₅, R₆, R₇, R₈ et R₉ représentant des radicaux alkyles de 2 à 4 atomes de carbone ou un radical cyclohexyle ou

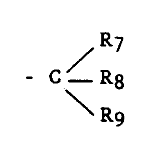

On a trouvé que le rapport pondéral entre le soufre élémentaire et le dérivé sulfuré devait être compris entre 20/80 et 80/20, et de préférence entre 40/60 et 60/40.

En dehors de ces proportions, on parvient difficilement à fabriquer des liants bitumineux ayant des propriétés appropriées.

La Demanderesse a également trouvé que l'on pouvait avantageusement ajouter un composé alcalin soluble dans le bitume, avec les agents de vulcanisation.

Lorsque l'on ajoute un composé alcalin, on le choisit parmi les dérivés aminés comme la diéthanolamine ou la diéthylène triamine ou la triéthanolamine. Cependant, d'autres composés alcalins peuvent également être utilisés. La quantité adéquate de ce composé alcalin à introduire avec les agents de vulcanisation est comprise entre 0,05 et 1% en poids basé sur le poids de liant bitumineux.

Sans pour autant être lié par une quelconque théorie, on a constaté que la présence de ce composé alcalin dans la composition permettait d'améliorer encore les caractéristiques suivantes :
- une vitesse de réaction contrôlable,
- un degré de réticulation adéquat.

Bien que de nombreux procédés mentionnent l'utilisation d'un accélérateur de vulcanisation, il n'est plus apparu nécessaire d'en utiliser avec la composition de l'invention.

Bien qu'il ne soit pas nécessaire pour le procédé de l'invention d'ajouter une huile pétrolière pour favoriser l'incorporation des ingrédients dans le bitume, il est évident que l'on peut malgré tout en utiliser sans sortir du cadre de la présente invention. L'huile peut être utilisée avant ou après la réaction de vulcanisation.

Selon un mode d'exécution du procédé de l'invention, on incorpore la quantité adéquate de caoutchouc dans le bitume, et ce à une température le plus souvent comprise entre 140 et 180°C afin de ne pas trop dégrader le caoutchouc. Le temps d'incorporation dépend bien sûr du système d'agitation utilisé et de la température de travail, mais également de la forme sous laquelle on introduit le caoutchouc. De fait, on peut ajouter le caoutchouc sous forme de granulés compacts ou sous forme de blocs très poreux qui se dissolvent plus facilement.

Ainsi, lorsque l'incorporation a eu lieu, on introduit à ce moment la quantité totale d'agent de vulcanisation et, le cas échéant de composé alcalin, à la même température que celle à laquelle on a dissous le caoutchouc. On laisse agir pendant 100 à 150 minutes à cette température et on envoie le liant au stockage ou pour utilisation immédiate.

On a constaté d'une manière inattendue, que les liants de l'invention retenaient une bien meilleure élasticité à basse température, que ceux de l'art antérieur, et de plus, permettaient une meilleure cohésion des agrégats utilisés dans le revêtement routier.

On peut réaliser des revêtements routiers par épandage à chaud des liants de la présente invention ou encore par épandage du liant émulsifié sous forme d'émulsion aqueuse de bitume et de caoutchouc.

Généralement, pour préparer l'émulsion de ce liant, on introduit dans le liant une partie de la quantité totale d'émulsifiant, on émulsifie alors le mélange dans une phase aqueuse contenant le reste de la quantité d'émulsifiant et une quantité suffisante d'acide pour neutraliser l'émulsifiant. Il est entendu que la quantité totale d'émulsifiant peut également être introduite dans la phase aqueuse.

Les exemples suivants sont donnés afin de mieux illustrer la présente invention.

### Exemple 1

On a préparé un liant en mélangeant pendant 1h30 à 160°C 96 parties d'un bitume ayant une pénétration 180/200 avec 4 parties d'un copolymère bloc à structure radiale du type styrène-butadiène ayant un poids moléculaire de 180 000 et dont la proportion de styrène est de 20%, pris sous forme de granulés poreux.

On a injecté également 0,1 parties d'un mélange comprenant des quantités égales de soufre élémentaire et du dérivé sulfuré de formule (I). 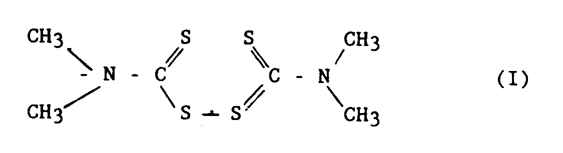
On a également ajouté à ce mélange 0,2 parties de triéthanolamine.

Après une période comprise entre 1h30 et 2 heures, on a obtenu un mélange homogène, dont les propriétés sont indiquées dans le tableau ci-dessous. Les mesures d'élongation et de tension à la rupture ont été réalisées en suivant la méthode ASTM D-412

**Tableau**

| | | |
|---|---|---|
| Temps de malaxage | 0h | 3h |
| Viscosité à 135°C (cP) | 765 | 1008 |
| Elongation (%) (mesure à 25°C) | 2400 | 5200 |
| Tension à la rupture (MPa) | 0,052 | 0,120 |
| Elongation (%) (mesurée à -5°C) | 600 | 2200 |

A titre de comparaison, on a préparé le même liant contenant également la diéthanolamine mais en utilisant uniquement du soufre élémentaire (à raison de 0,1 parties) comme agent de vulcanisation.

On a obtenu les résultats suivants :

| | | |
|---|---|---|
| Temps de malaxage | 0h | 3h |
| Viscosité à 135°C (cP) | 750 | 1900 |
| Tension à la rupture (MPa) | 0,052 | 0,150 |

| Elongation (%) | | |
|---|---|---|
| à 25°C | 2200 | 1500 |
| à - 5°C | 600 | 900 |

On a de plus constaté la présence de gel en quantité importante.

### Exemple 2

On a préparé un liant en mélangeant à 170°C 87,9 parties d'un bitume ayant une pénétration 180/200 avec 12 parties d'un copolymère bloc à structure radiale de type styrène-butadiène ayant un poids moléculaire de 160 000 et dont la proportion de styrène est de 30%.

On a préparé ce liant à une temperature de 170°C.

On a également injecté 0,15 parties d'un mélange comprenant :
60% de 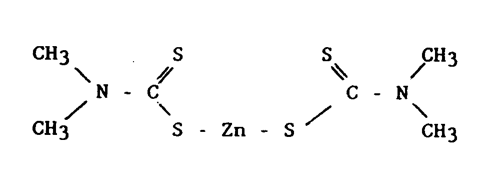
et
40% de soufre élémentaire.

On a également ajouté à ce mélange 0,2 parties de triéthanolamine.

Après une période comprise entre 2 et 3 heures, on a obtenu un mélange homogène, dont les propriétés étaient les suivantes :

| | |
|---|---|
| Viscosité à 180°C, (cP) | 1500 |
| Tension à la rupture (MPa) | 0,076 |

| Elongation (%) | |
|---|---|
| à 25°C | 2500 |
| à - 5°C | 1400 |

Le même mélange contenant comme agent de vulcanisation 0,3 parties de soufre élémentaire avait une élongation à -5°C de 300% seulement.

### Exemple 3

On a préparé le liant décrit dans l'exemple 1 à raison de :
8500 kg de bitume de pénétration 180/200
436 kg de copolymère butadiène-styrène de poids moléculaire 180 000 et ayant une teneur en styrène de 20%.
7,5 kg d'un mélange 50/50 de soufre élémentaire et d'un dérivé sulfuré de formule (I).

On a également ajouté 24 kg d'un émulsifiant comprenant une diamine de suif hydrogéné et une polyamine de suif hydrogéné.

On a préparé une phase aqueuse comprenant :
31 l HCl concentré
17 l du système émulsifiant
50 l d'huile de goudron
2900 l d'eau.

On a émulsioné les 2 phases dans une proportion bitume/eau de 70/30.

Cette émulsion est aisément étendue à 70°C. La rupture de l'émulsion apparait après environ 30 minutes.

On a pris un échantillon d'émulsion, on a éliminé l'eau et on a mesuré l'élongation sur cet échantillon.

L'élongation à 25°C était de 2700 % tandis que celle à -5°C était de 1400 %.

### Exemple 4

On a préparé un liant en mélangeant pendant 1h30 à 160°C 96 parties d'un bitume ayant une pénétration 180/200 avec 4 parties d'un copolymère bloc à structure radiale du type styrène-butadiène ayant un poids moléculaire de 280 000 et dont la proportion de styrène est de 30%, pris sous forme de granulés poreux.

On a injecté également 0,06 parties d'un mélange comprenant des quantités égales de soufre élémentaire et du dérivé sulfuré de formule (I). 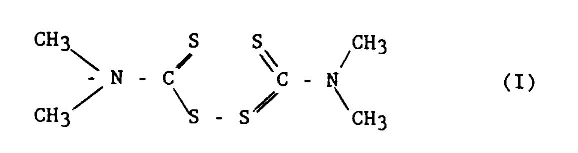
Après une période comprise entre 1h30 et 2 heures, on a obtenu un mélange homogène, dont les propriétés sont indiquées dans le tableau ci-dessous. Les mesures d'élongation et de tension à la rupture ont été réalisées en suivant la méthode ASTM D-412

**Tableau**

| | | |
|---|---|---|
| Temps de malaxage | 0h | 3h |
| Viscosité à 135°C (cP) | 1200 | 2051 |
| Elongation (%) (mesure à 25°C) | 2350 | 4800 |
| Tension à la rupture (MPa) | 0,09 | 0,11 |
| Elongation (%) (mesurée à -5°C) | 500 | 1600 |

A titre de comparaison, on a préparé le même liant mais en utilisant uniquement du soufre élémentaire (à raison de 0,06 parties) comme agent de vulcanisation.

On a obtenu les résultats suivants :

| | | |
|---|---|---|
| Temps de malaxage | 0h | 3h |
| Viscosité à 135°C (cP) | 1200 | 3000 |
| Tension à la rupture (MPa) | 0,052 | 0,15 |

| Elongation (%) | | |
|---|---|---|
| à 25°C | 2000 | 1400 |
| à - 5°C | 400 | 650 |

On a de plus constaté la présence de gel en quantité importante.

### Exemple 5

On a préparé un liant en mélangeant pendant 1h30 à 170°C 94 parties d'un bitume ayant une pénétration 180/200 avec 6 parties d'un copolymère bloc à structure radiale de type styrène-butadiène ayant un poids moléculaire de 180 000 et dont la proportion de styrène est de 20%.

On a préparé ce liant à une température de 170°C.

On a également injecté 0,12 parties d'un mélange comprenant :
50% de 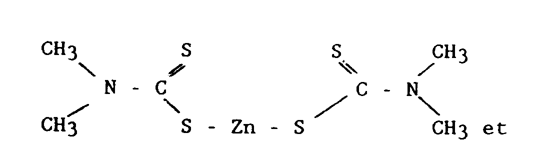
50% de soufre élémentaire.

Après une période d'environ 2 heures, on a obtenu un mélange homogène, dont les propriétés étaient les suivantes :

| | 2 heures | 4 heures |
|---|---|---|
| Viscosité à 120°C, (cP) | 2970 | 3070 |
| Tension à la rupture (MPa) | 0,034 | 0,020 |

| Elongation (%) | | |
|---|---|---|
| à 25°C | 3600 | 7600 |
| à - 5°C | 800 | 2000 |

Le même mélange contenant comme agent de vulcanisation 0,3 parties de soufre élémentaire avait une élongation à -5°C de 400% seulement.

## Revendications

1. Procédé de préparation de compositions de bitume-polymère caractérisé en ce qu'il consiste à :
(i) mettre en contact à une température comprise entre 140 et 200°C un bitume de pénétration comprise entre 20 et 320 et de 1 à 20% en poids de polymère caoutchouteux basé sur le poids du mélange;
(ii) introduire dès que le polymère caoutchouteux est incorporé dans le bitume, de 0,01 à 0,10 % en poids basé sur le poids du mélange bitume-copolymère caoutchouteux d'un mélange comprenant (a) un dérivé sulfuré choisi parmi les dérivés de formules générales suivants représentés par les formules générales indiquées ci-après 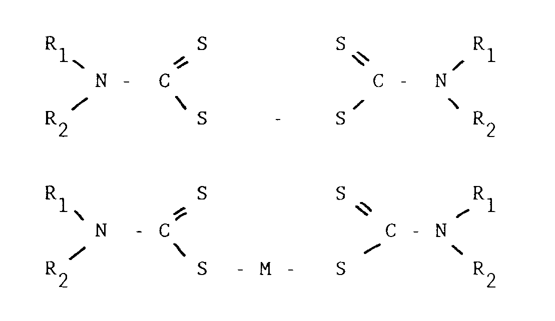 dans lesquelles R₁, R₂ sont des radicaux alkyles égaux ou différents ayant de 1 à 4 atomes de carbone, ou représentant ensemble le radical 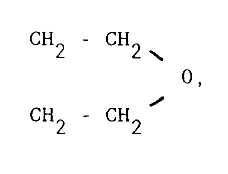 et où
M est un métal choisi parmi le zinc, le barium et le cuivre,
et (b) du soufre élémentaire, pris dans un rapport pondéral dérivé sulfuré/soufre élémentaire compris entre 40/60 et 80/20.

2. Procédé selon la revendication 1 caractérisé en ce que le dérivé sulfuré est choisi parmi le composé de formule : 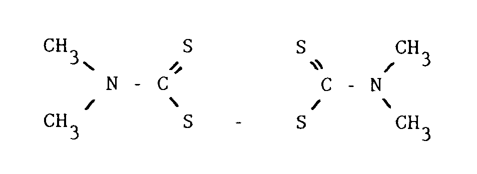 et le composé sulfuré de formule

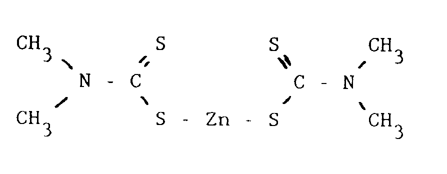

3. Procédé selon la revendication 1, caractérisé en ce que le copolymère caoutchouteux est choisi parmi les copolymères blocs linéaires ou branchés styrène-butadiène, styrène-isoprène, styrène-butadiène-styrène ou styrène-isoprène-styrène.

4. Procédé selon la revendication 3, caractérisé en ce que l'on utilise un polymère caoutchouteux ayant un poids moléculaire compris entre 30,000 et 300,000.

5. Procédé selon l'une quelconque des revendications 1 à 4, caractérisé en ce que l'on introduit le polymère caoutchouteux dans le mélange bitume-polymère, à raison de 4 à 10% en poids basé sur le poids du mélange.

6. Procédé selon l'une quelconque des revendications précédentes, caractérisé en ce que l'on ajoute dans le bitume simultanément avec les agents de vulcanisation, un composé alcalin soluble dans le bitume.

7. Procédé selon l'une quelconque des revendications précédentes, caractérisé en ce que l'on introduit le mélange d'agents de vulcanisation et le cas échéant le composé alcalin à la même température que celle à laquelle on a dissous le copolymère caoutchouteux dans le bitume.

8. Compositions obtenues par le procédé de l'une quelconque des revendications précédentes.

9. Emulsions de bitume et de caoutchouc obtenues avec les compositions décrites à la revendication 8.

10. Procédé de préparation de compositions de bitume-polymère caractérisé en ce qu'il consiste à :
(i) mettre en contact à une température de 170°C 87,9 parties d'un bitume de pénétration 180/200 et 12 parties d'un copolymère bloc à structure radiale de type styrène - butadiène ayant un poids moléculaire de 160 000 et dont la proportion de styrène est de 30%;
(ii) introduire dès que le copolymère est incorporé dans le bitume 0,15% en poids basé sur le poids du mélange comprenant bitume-copolymère d'un mélange comprenant (a) 60% d'un dérivé sulfuré de formule suivante 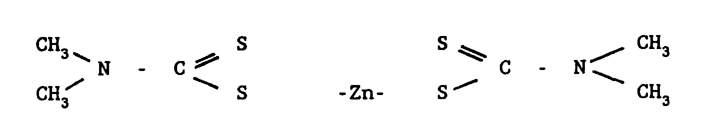 et (b) 40% de soufre élémentaire;
(iii) ajouter à ce mélange 0,2 parties de triéthanolamine.

11. Procédé de préparation de compositions de bitume-polymère caractérisé en ce qu'il consiste à :
(i) mettre en contact pendant 1h30 à une température de 170°C 94 parties d'un bitume de pénétration 180/200 et 6 parties d'un copolymère bloc à structure radiale de type styrène - butadiène ayant un poids moléculaire de 180 000 et dont la proportion de styrène est de 20%;
(ii) introduire dès que le copolymère est incorporé dans le bitume 0,12% en poids basé sur le poids du mélange comprenant bitume-copolymère d'un mélange comprenant (a) 50% d'un dérivé sulfuré de formule suivante. 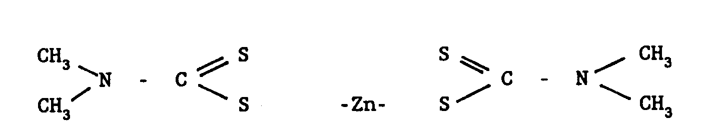 et (b) 50% de soufre élémentaire.

## Claims

1. Process for preparing bitumen/polymer compositions characterized in that it consists in:
(i) bringing a bitumen of penetration between 20 and 320 and 1 to 20% by weight of a rubbery polymer, based on the weight of the mixture, into contact at a temperature of between 140 and 200°C;
(ii) introducing, as soon as the rubbery polymer is incorporated in the bitumen, from 0.01 to 0.10% by weight, based on the weight of the bitumen/rubbery polymer mixture, of a mixture comprising (a) a sulphur-containing derivative chosen from the group comprising the derivatives of the formulae I and II 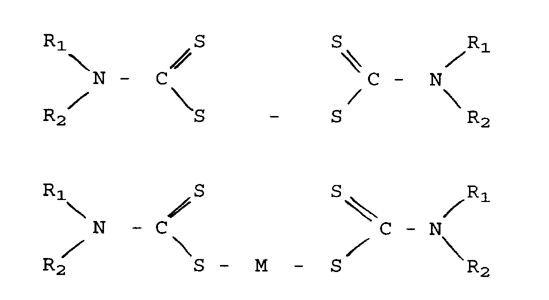 in which formulae R₁ and R₂ are like or different alkyl radicals having from 1 to 4 carbon atoms, or denoting together a 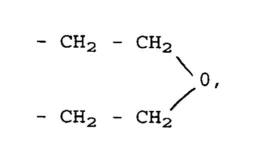 radical, and where
M is a metal chosen from zinc, barium and copper, and (b) elemental sulphur used in a sulphur-containing derivative/elemental sulphur weight ratio of between 40:60 and 80:20.

2. Process according to Claim 1, characterized in that the sulphur-containing derivative is chosen from the compound of formula: 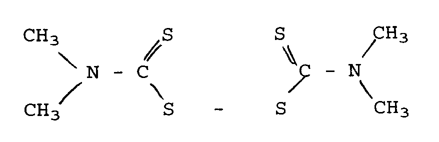 and the sulphur-containing compound of formula

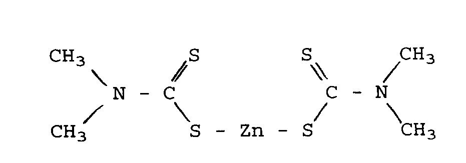

3. Process according to Claim 1, characterized in that the rubbery copolymer is chosen from linear or branched block copolymers of the styrene/butadiene, styrene/isoprene, styrene/butadiene/styrene or styrene/isoprene/styrene type.

4. Process according to claim 3, characterized in that a rubbery polymer having a molecular weight of between 30,000 and 300,000 is used.

5. Process according to any one of claims 1 to 4, characterized in that the rubbery polymer is introduced into the bitumen/polymer mixture in the proportion of 4 to 10% by weight, based on the weight of the mixture.

6. Process according to any one of the preceding claims characterized in that an alkaline compound, soluble in the bitumen, is added in the bitumen simultaneously with the vulcanizing agents.

7. Process according to any of the preceding claims, characterized in that a mixture of vulcanizing agents and the alkaline compound are introduced at the same temperature as that at which the rubbery copolymer has been dissolved in the bitumen.

8. Compositions obtained by the process of any one of the preceding claims.

9. Emulsions of bitumen and of rubber obtained with the compositions described in claim 8.

10. Process for the preparation of bitumen-polymer compositions characterized in that it consists in:
(i) bringing into contact at a temperature of 170°C, 87,9 parts of a bitumen having a penetration of 180/200 with 12 parts of a radial-structured block copolymer of the styrene/butadiene type having a molecular weight of 160,000 and in which the proportion of styrene is 30%.
(ii) introducing as soon as the copolymer is incorporated in the bitumen of 0.15% by weight based on the weight of the bitumen-copolymer mixture, of a mixture comprising (a) 60% of a sulphur-containing derivative of the following formula : 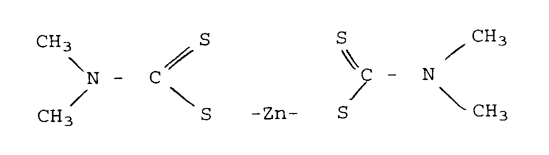 and (b) 40% of elemental sulphur.
(iii) adding 0.2 part of triethanolamine to this mixture.

11. Process for the preparation of bitumen-polymer compositions characterized in that it consists in:
(i) bringing into contact during 1h30 at a temperature of 170°C, 94 parts of a bitumen having a penetration of 180/200 with 6 parts of a radial-structured block copolymer of the styrene/butadiene type having a molecular weight of 180,000 and in which the proportion of styrene is 20%.
(ii) introducing as soon as the copolymer is incorporated in the bitumen of 0.12% by weight, based on the weight of the bitumen-copolymer mixture, of a mixture comprising (a) 50% of a sulphur-containing derivative of the following formula : 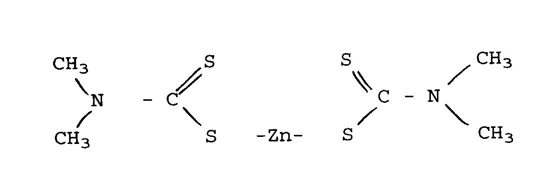 and (b) 50% of elemental sulphur.

## Patentansprüche

1. Verfahren zur Herstellung von Bitumen-Polymer-Zusammensetzungen, dadurch gekennzeichnet, daß es besteht aus:
(i) in-Kontakt-Bringen eines Bitumens der Penetration von 20 bis 320 mit 1 bis 20 Gew.% eines kautschukartigen Polymers, bezogen auf das Gewicht der Mischung, bei einer Temperatur zwischen 140 und 200°C;
(ii) Einführen, sobald das kautschukartige Polymer in das Bitumen eingearbeitet ist, von 0,01 bis 0,10 Gew.%, bezogen auf das Gewicht der Mischung aus Bitumen und kautschukartigem Polymer, einer Mischung, die enthält:
(a) ein Schwefelderivat, das aus den Derivaten der folgenden allgemeinen Formeln ausgewählt ist, die durch die im folgenden angegebenen allgemeinen Formeln dargestellt sind 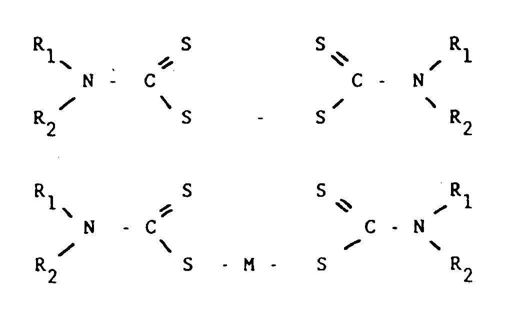 in welchen R₁ und R₂ gleiche oder unterschiedliche Alkylreste mit 1 bis 4 Kohlenstoffatomen sind oder gemeinsam für den Rest 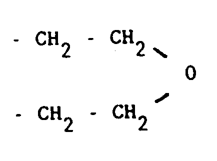 stehen und M ein Metall, ausgewählt aus Zink, Barium und Kupfer, darstellt, und
(b) elementaren Schwefel in einen Gewichtsverhältnis von Schwefelderivat/elementarer Schwefel zwischen 40/60 und 80/20.

2. Verfahren nach Anspruch 1, dadurch gekennzeichnet, daß das Schwefelderivat aus der Verbindung der Formel: 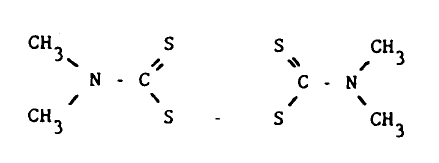 und der Schwefelverbindung der Formel 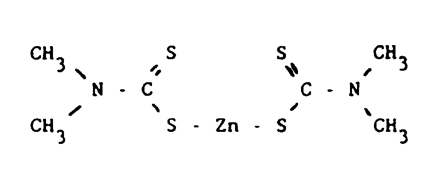 ausgewählt ist.

3. Verfahren nach Anspruch 1, dadurch gekennzeichnet, daß das kautschukartige Polymer aus den linearen oder verzweigten Block-Copolymeren von Styrol-Butadien, Styrol-Isopren, Styrol-Butadien-Styrol oder Styrol-Isopren-Styrol ausgewählt ist.

4. Verfahren nach Anspruch 3, dadurch gekennzeichnet, daß man ein kautschukartiges Polymer mit einem Molekulargewicht von 30.000 bis 300.000 verwendet.

5. Verfahren nach einem der Ansprüche 1 bis 4, dadurch gekennzeichnet, daß man das kautschukartige Polymer in die Bitumen-Polymer-Mischung in einer Menge von 4 bis 10 Gew.%, bezogen auf das Gewicht der Mischung, einführt.

6. Verfahren nach einem der vorhergehenden Ansprüche, dadurch gekennzeichnet, daß man in das Bitumen gleichzeitig mit den Vulkanisationsmitteln eine in dem Bitumen lösliche alkalische Verbindung einbringt.

7. Verfahren nach einem der vorhergehenden Ansprüche, dadurch gekennzeichnet, daß man die Mischung aus Vulkanisationsmitteln und gegebenenfalls alkalischer Verbindung bei der gleichen Temperatur einführt wie jener, bei der das kautschukartige Copolymer in dem Bitumen gelöst wurde.

8. Zusammensetzungen, die nach dem Verfahren nach einem der vorhergehenden Ansprüche erhalten wurden.

9. Emulsionen von Bitumen und Kautschuk, die mit den in Anspruch 8 beschriebenen Zusammensetzungen erhalten wurden.

10. Verfahren zur Herstellung von Bitumen-Polymer-Zusammensetzungen, dadurch gekennzeichnet, daß es besteht aus:
(i) in-Kontakt-Bringen von 87,9 Teilen eines Bitumens der Penetration 180/200 mit 12 Teilen eines Block-Copolymers mit Radialstruktur vom Typ Styrol-Butadien, das ein Molekulargewicht von 160.000 und einen Styrolanteil von 30 % aufweist, bei einer Temperatur von 170°C;
(ii) Einführen, sobald das Copolymer in das Bitumen eingearbeitet ist, von 0,15 Gew.%, bezogen auf das Gewicht der Mischung aus Bitumen und Copolymer, einer Mischung die enthält:
(a) 60 % eines Schwefelderivates der folgenden Formel 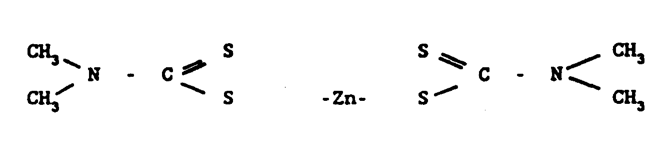 und (b) 40 % elementaren Schwefel;
(iii) Zusetzen von 0,2 Teilen Triethanolamin zu dieser Mischung.

11. Verfahren zur Herstellung von Bitumen-Polymer-Zusammensetzungen, dadurch gekennzeichnet, daß es besteht aus:
(i) in-Kontakt-Bringen von 94 Teilen eines Bitumens der Penetration 180/200 mit 6 Teilen eines Block-Copolymers mit Radialstruktur vom Typ Styrol-Butadien, das ein Molekulargewicht von 180.000 und einen Styrolanteil von 20 % aufweist, während 1 1/2 Stunden bei einer Temperatur von 170°C;
(ii) Einführen, sobald das Copolymer in das Bitumen eingearbeitet ist, von 0,12 Gew.%, bezogen auf das Gewicht der Mischung aus Bitumen und Copolymer, einer Mischung, die enthält:
(a) 50 % eines Schwefelderivates der folgenden Formel 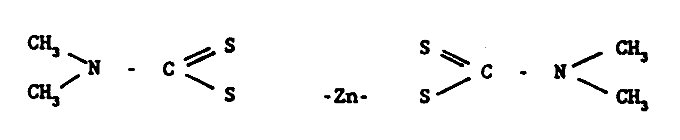 und (b) 50 % elementaren Schwefel.
